# FASCICULE DE BREVET EUROPEEN

(11) **EP 3 449 107 B1**
(45) Date de publication et mention de la délivrance du brevet: **12.02.2020**
(21) Numéro de dépôt: 17734245.8
(22) Date de dépôt: 26.04.2017
(51) Int. Cl.: F01P 3/20

(54) **AGENCEMENT D'ECHANGEURS DE MARINISATION D'UN MOTEUR MARIN**
ANORDNUNG VON SCHIFFSANPASSUNGSAUSTAUSCHERN EINES SCHIFFSMOTORS
ARRANGEMENT OF MARINE ADAPTATION EXCHANGERS OF A MARINE ENGINE

(30) Priorité: 28.04.2016 FR 1653806
(43) Date de publication de la demande: 06.03.2019
(73) Titulaire: Nanni Industries, 33260 La Teste de Buch (FR)
(72) Inventeur: ARATI, Jacques, 33470 Gujan Mestras (FR)
(74) Mandataire: Aquinov
(86) Numéro de dépôt international: PCT/EP2017/059975
(87) Numéro de publication internationale: WO 2017/186812

(56) Documents cités:
- EP-A2- 2 357 130
- JP-U- H0 717 919
- US-A1- 2006 096 555
- US-A1- 2011 308 486
- US-B1- 6 748 906

## Description

La présente invention concerne un agencement d'échangeurs de marinisation d'un moteur marin, notamment de l'échangeur du liquide de refroidissement, de l'échangeur de l'air d'admission du turbocompresseur et de l'échangeur de l'huile de l'inverseur. Un tel agencement est montré dans le document US2011/0308486 A1.

Les moteurs marins de puissance à savoir des moteurs à explosion interne fonctionnant au gasoil, développant plusieurs centaines de chevaux, sont utilisés sur des embarcations de travail, de service, de pêche ou encore de plaisance. De tels des moteurs sont issus, pour la plupart, de constructeurs de moteurs de véhicules terrestres , que ce soit des véhicules destinés au transport routier, des engins de chantier ou encore des machines agricoles.

Pour développer une base moteur, les coûts sont extrêmement importants car ces moteurs sont de plus en plus sophistiqués, de plus en plus précis lors de leur fonctionnement avec notamment des gestions de températures qui se situent dans des plages précises.

De plus, la fiabilité est de plus en plus importante et il faut pour cela que tous les aspects de fonctionnement soient parfaitement maîtrisés.

Ces bases moteur doivent pouvoir être montées et utilisées sur le plus grand nombre de véhicules, d'engins ou de machines pour assurer l'amortissement des études et des moyens de fabrication.

En fonctionnement, ces moteurs doivent être refroidis pour évacuer une partie résiduelle des calories générées par le fonctionnement et un liquide de refroidissement circule dans le bloc moteur à cet effet.

Ce liquide de refroidissement circule à travers un échangeur de refroidissement pour son propre refroidissement. Dans le cas des engins terrestres, cet échangeur est un échangeur eau/air.

Quant aux moteurs de puissance, ils sont systématiquement équipés de turbocompresseurs qui compriment les gaz destinés à être admis dans le moteur grâce aux gaz d'échappement. A cet effet, une turbine chaude est entraînée par les gaz d'échappement dans une première chambre et une turbine froide solidaire du même arbre est entrainée en rotation dans une chambre froide.

Les gaz d'échappement sont évacués en sortie de la chambre chaude vers la ligne d'échappement et les gaz comprimés sont injectés dans les cylindres du moteur avec le mélange combustible.

Le problème est qu'un gaz comprimé s'échauffe, or pour obtenir le meilleur fonctionnement avec un moteur à explosion interne, il est nécessaire de disposer de gaz comprimés mais il est aussi nécessaire de les refroidir avant le mélange avec le combustible pour améliorer le rendement. Un échangeur est donc interposé en sortie de la chambre froide du turbocompresseur pour refroidir l'air comprimé avant son transfert vers le moteur.

Cet échangeur est du type air/air sur les moteurs de véhicules terrestres.

Sur les moteurs terrestres, les moteurs sont accouplés à des boîtes de vitesses manuelles ou automatiques dont les fonctionnements et les agencements sont complexes et nombreux. L'huile de ces boîtes de vitesses sont éventuellement refroidies par un échangeur huile/air indépendant.

Dans les moteurs marins, les agencements des organes de refroidissements sont nécessairement différents puisqu'il est impossible de refroidir à partir de l'air. Le fluide de refroidissement est l'eau douce ou l'eau de mer.

La marinisation consiste à proposer des échangeurs qui permettent de faire fonctionner le moteur avec une grande fiabilité d'une part, une très grande longévité d'autre part, la performance étant d'autant plus difficile lorsqu'il s'agit d'eau de mer fortement corrosive. L'avantage est de disposer d'un fluide de refroidissement à fort coefficient caloporteur.

Par contre, ces agencement de moteurs marins sont délicats à mettre en œuvre car ces moteurs sont disposés en fond de coque et dans des espaces généralement exigus, voire très exigus.

La compacité est donc un paramètre très important dans le domaine des échangeurs marins afin de ne pas ajouter à l'encombrement du moteur.

D'une part il faut pouvoir mettre en place le moteur mais aussi le retirer du fond de cale or les passages d'accès sont limités en dimensions. De plus, une fois mis en place, plus l'agencement est compact et plus la place disponible en périphérie pour des opérations de maintenance et/ou de réparations est augmentée et cela peut s'avérer très utile.

Ce gain de compacité doit préserver les qualités d'échanges.

Une autre particularité des moteurs marins est celle de voir ces moteurs accouplés à un inverseur de marche permettant également de faire tourner l'hélice mais dans le sens de rotation contraire afin de procéder à une marche arrière.

Un tel inverseur est immergé dans un carter et baigne dans de l'huile et, en fonctionnement cette huile s'échauffe, et il convient de la refroidir également.

De même, le turbocompresseur des moteurs à mariniser doit être associé à un échangeur afin de refroidir l'air admis dans le moteur. On comprend que, dans le cas d'un moteur marin, l'échangeur du type air/eau est beaucoup plus délicat qu'un échangeur air/air. Il convient de disposer d'une très grande fiabilité afin que de l'eau ne pénètre pas dans le circuit d'air d'admission susceptible de conduire à une casse moteur. Une panne moteur en mer est toujours un gros problème, beaucoup plus que sur terre, engendrant des mises en danger très rapidement importantes.

Dans le but d'augmenter la fiabilité et de diminuer l'encombrement, il est aussi important de limiter les organes adjoints comme les durites, les colliers, les bagues et autres platines de liaison. Ces organes sont soit sources de défaut de fiabilité, soit sources de poids et de coûts. Il est donc nécessaire d'épurer l'agencement et c'est justement une caractéristique importante de l'agencement selon la présente invention, agencement qui allie compacité, fiabilité par suppression des sources de défauts et optimisation de la chaîne du circuit de refroidissement.

La présente invention est maintenant décrite en regard des dessins annexés, dessins qui représentent un mode de réalisation avec une variante, les figures de ces dessins montrant respectivement :
- Figure 1 : une vue en perspective de l'agencement selon la présente invention, d'un moteur 6 cylindres en lignes avec son circuit d'échangeurs,
- Figure 2 : une vue en élévation latérale de l'agencement de la figure 1, sur laquelle est représenté en trait plein le circuit d'échangeurs selon la présente invention,
- Figure 3 : une vue de l'arrière de l'agencement de la figure 1,
- Figure 4 : une vue en perspective, de l'avant gauche d'un agencement d'une variante d'agencement du circuit d'échangeurs dans le cas d'un moteur 8 cylindres en Vé,
- Figure 5 : une vue de dessus de l'agencement de la figure 4,
- Figure 6: une vue en élévation latérale gauche de l'agencement de la figure 4,
- Figure 7 : une vue en élévation latérale droite de l'agencement de la figure 4.

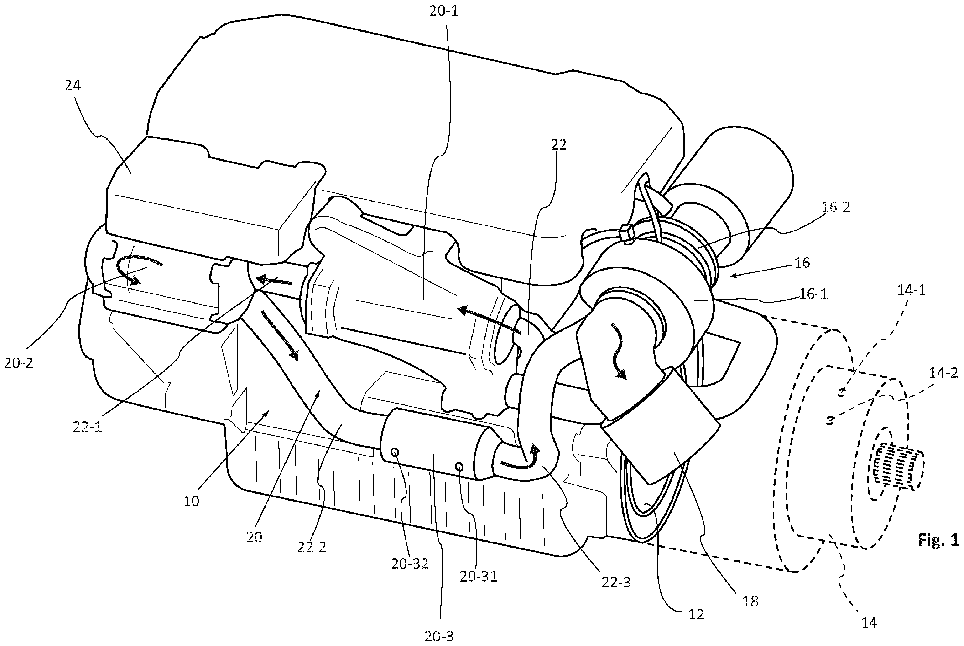

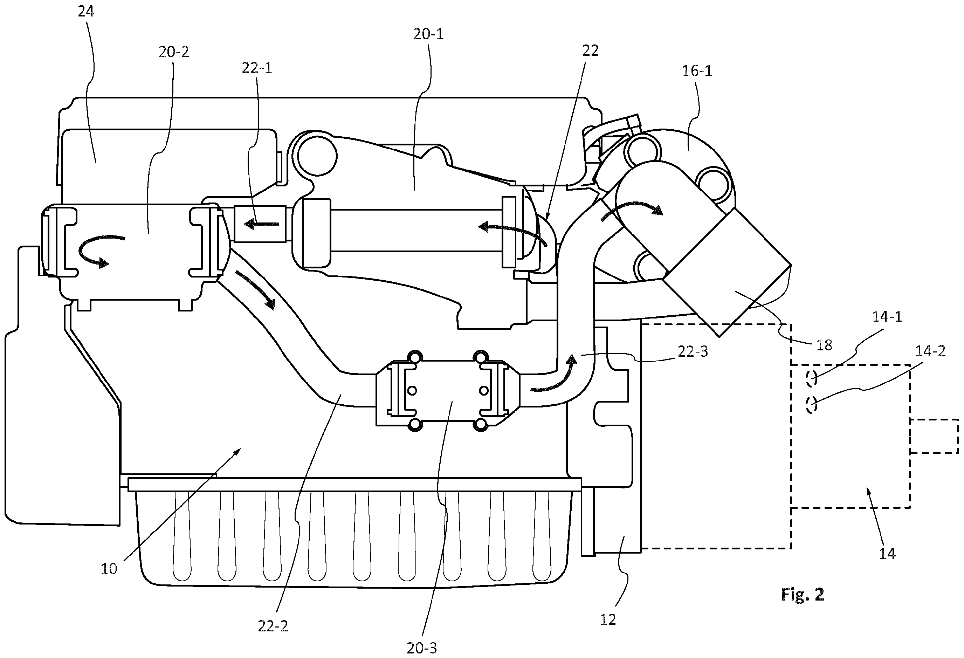

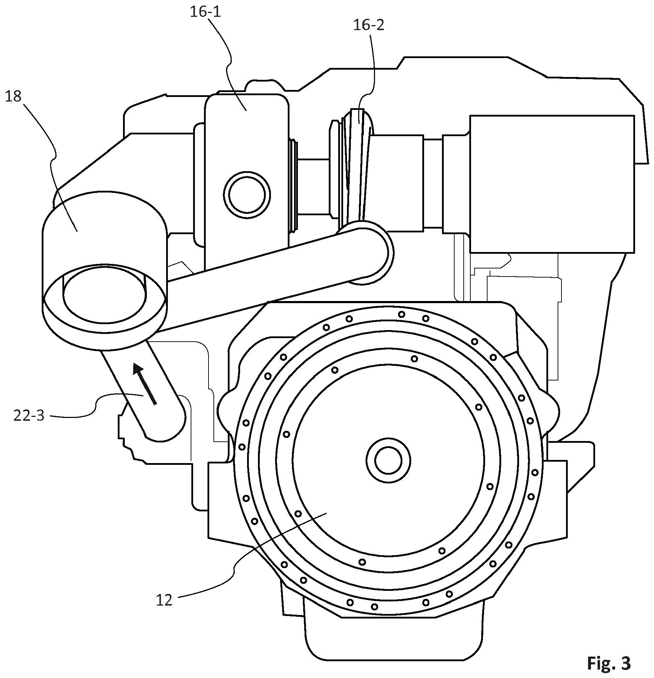

Un moteur à explosion interne, en l'occurrence un moteur six cylindres en ligne, est représenté sur les figures 1, 2 et 3.

Seuls les organes essentiels du moteur nécessaires à la description de l'invention sont décrits, les périphériques et les organes internes ne sont pas représentés car ils n'intéressent pas la présente invention.

Ce moteur comprend de façon générale un bloc moteur 10 avec une sortie 12 vers des moyens de propulsion tels qu'une ligne d'arbre, non représenté mais parfaitement connus de l'homme de l'art.

Un inverseur 14 est associé à cette sortie 12, en amont des moyens de propulsion.

Le bloc moteur 10 supporte également au moins un turbocompresseur 16, unique dans le moteur concerné des figures 1, 2 et 3. Ce turbocompresseur 16 comprend de façon tout à fait connue une chambre chaude 16-1 et une chambre froide 16-2.

Enfin, le moteur comporte une sortie 18 des gaz de combustion de la chambre chaude 16-1 du turbocompresseur 16 vers une ligne d'échappement.

Dans la présente invention il est prévu une ligne 20 d'échangeurs comprenant :
- Un échangeur de turbocompresseur 20-1,
- Un échangeur moteur 20-2,
- Un échangeur d'inverseur 20-3.

La caractéristique générale de l'agencement de la ligne 20 concerne ces trois échangeurs qui sont agencés dans cet ordre, celui qui correspond comme cela va maintenant être expliqué à la circulation du fluide caloporteur, en l'occurrence de l'eau douce ou salée.

Le moteur comprend de plus et de façon parfaitement connue également, une pompe à eau qui pompe de l'eau de refroidissement ER, extérieure, douce ou salée, grâce à des moyens de prélèvement parfaitement connus comprenant un passage étanche à travers la coque pour loger une prise d'eau, une crépine pour filtrer l'eau pompée.

L'eau ainsi pompée sort de la pompe à eau par une durite 22 pour passer d'abord à travers le premier échangeur, à savoir l'échangeur de turbocompresseur 20-1.

Cet échangeur de turbocompresseur 20-1 est un échangeur fluide gazeux/fluide liquide, comprenant un carter dans lequel circule l'eau de refroidissement ER. L'air compressé sortant de la chambre froide 16-2, néanmoins avec une température trop importante, circule dans des tubes traversant ledit carter, ce qui permet de faire passer les calories de l'air dans l'eau de refroidissement ER.

La chaleur massique de l'eau étant très supérieure à celle de l'air, la température de l'eau de refroidissement ER augmente en température mais de façon très limitée de 3 à 4°C pour donner un ordre d'idée.

L'air de l'échangeur de turbocompresseur 20-1 passe d'une température de 215°C à une température de 44°C, pour donner un ordre de grandeur. L'eau de refroidissement ER sort par une durite 22-1 de l'échangeur de turbocompresseur 20-1 et pénètre dans l'échangeur moteur 20-2.

Un tel échangeur moteur 20-2 est du type fluide liquide /fluide liquide, est notamment décrit en détail, selon un mode avantageux de réalisation dans la demande de brevet européen EP 2 009 259, au nom du même demandeur. L'efficacité de transfert est excellente.

Cet échangeur comporte également des tubes dans lesquels circulent le fluide de refroidissement FR du moteur sortant de canaux de circulation au sein du bloc moteur 10, le fluide refroidissement FR du moteur étant en circuit fermé ceci de façon connue.

Un réservoir à expansion 24 est interposé sur le circuit fermé et bien visible sur la figure 1. L'eau de refroidissement ER du moteur beaucoup plus froide que le fluide de refroidissement FR se charge en calories extraites dudit fluide de refroidissement.

Dans l'échangeur décrit dans la demande de brevet européen EP 2 009 259, la compacité dudit échangeur avec une circulation en U et à contreflux permet un excellent échange et on constate qu'il est logé avec un extrêmement faible déport par rapport au bloc moteur 10 et sous le réservoir d'expansion.

On note aussi que la durite 22-1 est extrêmement courte, les deux échangeurs de turbocompresseur et moteur sont alignés ce qui évite les pertes de charge, les dégradations liées à de la longueur de durite supplémentaire et des fixations supplémentaires.

Le positionnement de l'échangeur moteur en cet endroit et du même côté que l'échangeur de turbocompresseur limite aussi cette longueur de durite.

Dans le cas où l'échangeur moteur est du type à circulation en U, on constate que ledit échangeur permet aussi de renvoyer l'eau de refroidissement ER de l'avant du bloc moteur 10 vers l'arrière en l'occurrence.

L'eau de refroidissement ER, en fonction du régime du fonctionnement du moteur et de nombreux paramètres comme la température initiale de l'eau de refroidissement, le débit de circulation, la température dans le compartiment moteur, peut voir sa température s'élever d'une dizaine de degrés.

L'eau de refroidissement ER sort de l'échangeur moteur 20-2 par une durite 22-2 pour entrer dans l'échangeur d'huile 20-3 de l'inverseur. On note de nouveau que la longueur de durite est courte et la durite ne présente pas de coude et autre angle susceptible de créer de la perte de charge.

Cet échangeur d'huile 20-3 comporte un carter avec une entrée 20-31 et une sortie 20-32 et l'inverseur 14 comporte lui-même un entrée 14-1 et une sortie 14-2.

La sortie 14-2 de l'inverseur est reliée par un premier flexible hydraulique, de type commun, à l'entrée 20-31 de l'échangeur d'huile 20-3 et la sortie 20-32 est reliée par un second flexible hydraulique à l'entrée 14-1 de l'inverseur.

Ainsi l'huile sort de l'inverseur, entre dans l'échangeur d'huile 20-3, circule dans un tube de circulation au sein du carter de l'échangeur et se refroidit par échange avec l'eau de refroidissement ER qui circule dans le carter.

Cet échangeur est un échangeur fluide liquide/fluide liquide, dont un des fluides liquides est de l'huile si bien que l'échange est excellent.

Les calories de l'huile à évacuer sont limitées car l'échauffement est lui-même limité si bien que, même si le différentiel entre la température de l'eau de refroidissement ER et la température de l'huile est plus réduit du fait de la montée en température de l'eau de refroidissement, l'échange est largement suffisant pour refroidir la température de l'huile à la demande des organes de pilotage du moteur.

L'eau de refroidissement ER sort par la durite 22-3 de l'échangeur d'inverseur 20-3 pour entrer dans la sortie 18 des gaz de combustion, en aval de la chambre chaude 16-1 du turbocompresseur. De nouveau, cette durite est de longueur réduite L'eau se mélange aux gaz de combustion, assurant également leur refroidissement avant le passage dans la ligne d'échappement et rejet extérieur.

On constate une compacité importante de la ligne d'échangeurs 20 selon la présente invention, des longueurs de durite très limitées et un alignement de ces durites.

La ligne d'échangeurs 20, dans le cas d'un moteur avec cylindres en ligne, est ainsi intégralement du même côté du boc moteur 10. On note que la ligne d'échangeurs 20 est agencée suivant une spirale dans un plan vertical.

On note également l'absence de modifications des positionnements des organes du bloc moteur hors marinisation, la ligne d'échangeurs étant supportée par des pattes et intégrée au sein de ces organes périphériques rendant l'agencement particulièrement compact.

L'invention est maintenant décrite en regard d'un autre type de moteur dans lequel les cylindres sont en Vé, en l'occurrence un 8 cylindres en Vé.

La ligne d'échangeur correspondante comporte également un ordre identique de trois échangeurs, les références concernant ce type de moteur en Vé ayant des références identiques aux références du moteur avec les cylindres en ligne mais augmentées de 100 :
- Un échangeur de turbocompresseur 120-1
- Un échangeur moteur 120-2
- Un échangeur d'inverseur 120-3.

Les 8 cylindres sont ainsi répartis à raison de 4 cylindres par côté, ceci de façon parfaitement connue.

Ce moteur en Vé comprend de façon générale un bloc moteur 110 avec une sortie 112 vers des moyens de propulsion tels qu'une ligne d'arbre, non représentés, mais parfaitement connus de l'homme de l'art.

Un inverseur 114 est associé à cette sortie 112, en amont des moyens de propulsion.

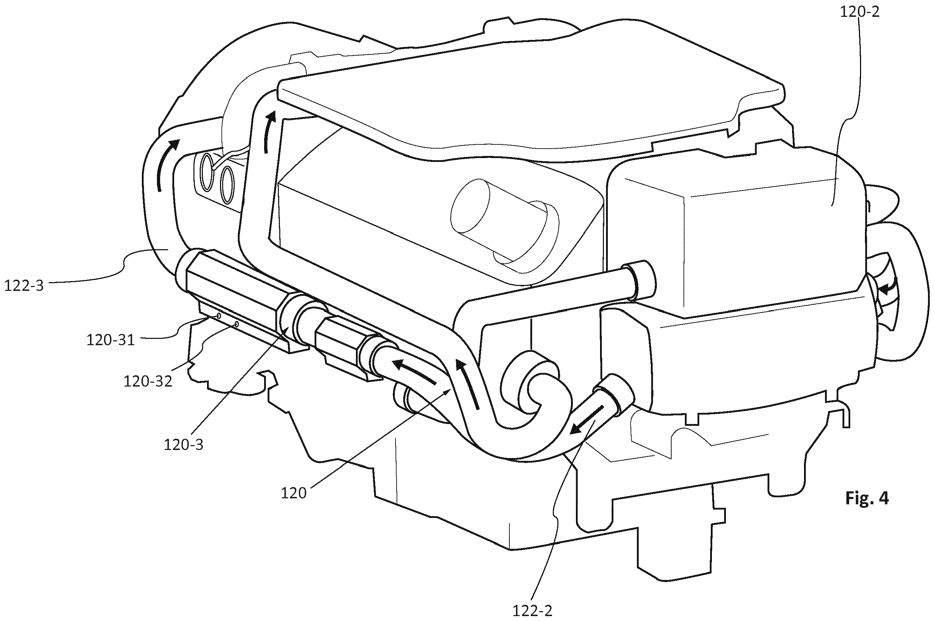

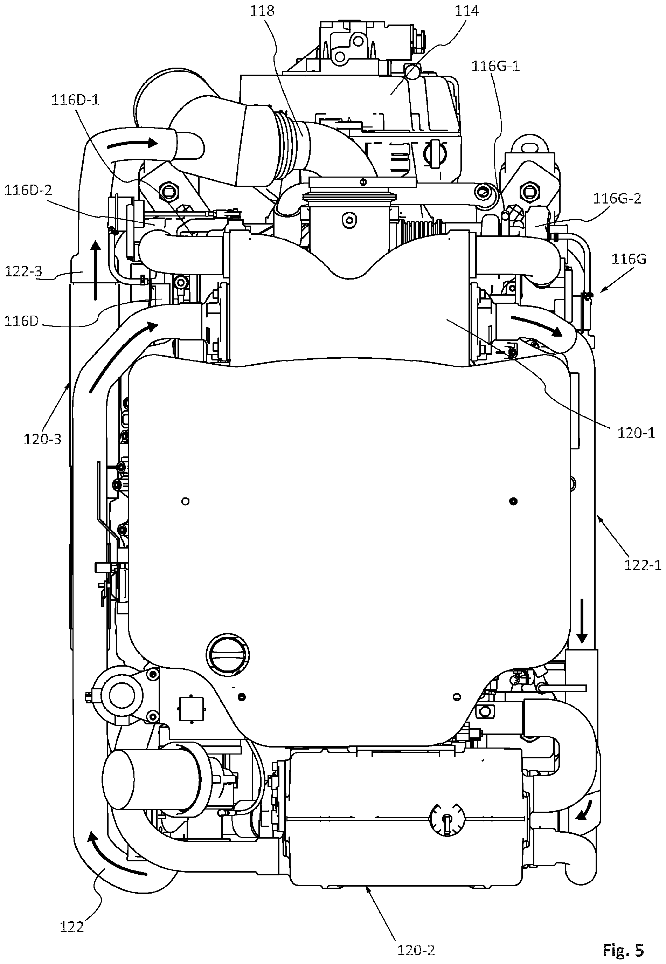

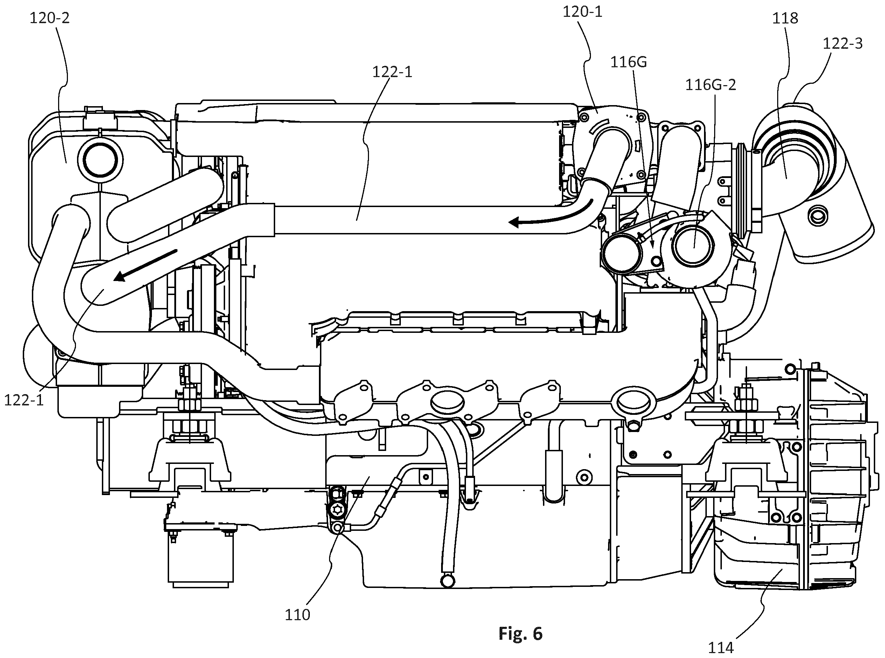

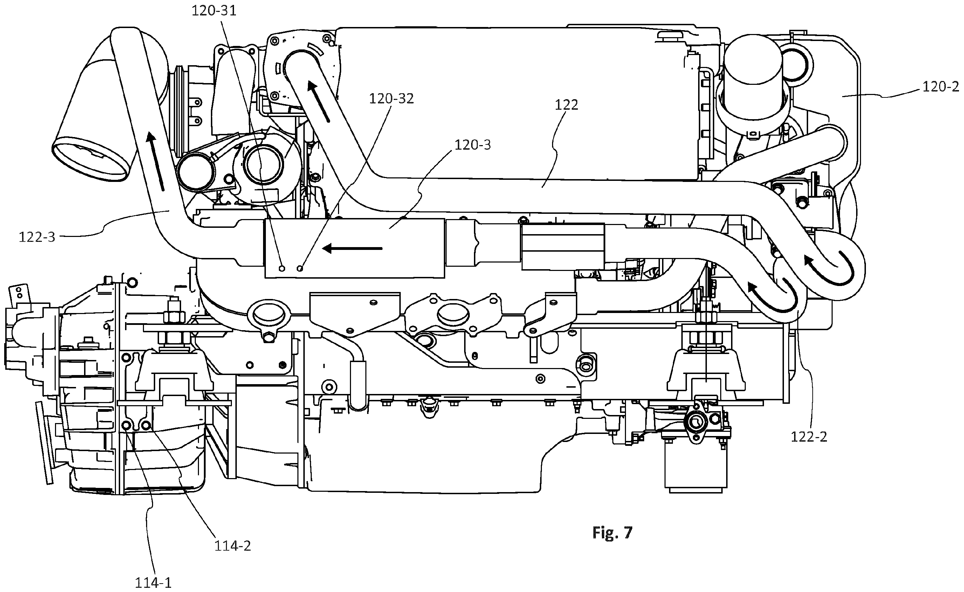

Le bloc moteur 110 supporte également deux turbocompresseurs 116D et 116G, droit et gauche, dans le moteur concerné et représenté sur les figures 4 à 7. Ces deux turbocompresseurs sont disposés à l'arrière du moteur

Ces turbocompresseurs 116D et 116G comprennent chacun de façon tout à fait connue une chambre chaude 116D-1, 116G-1 et une chambre froide 116D-2, 116G-2.

Le moteur comporte une sortie 118 des gaz de combustion, unique et commune, des chambres chaudes 116D-1, 116G-1 des turbocompresseurs 116 et 117 vers une ligne d'échappement.

L'échangeur de turbocompresseurs 120-1 des deux turbocompresseurs 116D et 116G est un échangeur commun.

Cet échangeur de turbocompresseurs 120-1 est avantageusement disposé en travers du moteur, les deux entrées des deux turbocompresseurs venant se rejoindre dans le plan médian du moteur.

Cet échangeur de turbocompresseurs 120-1 est disposé immédiatement au-dessus du bloc moteur, au droit du haut des cylindres, dans le Vé libéré par les cylindres, ne générant aucun volume en saillie au-delà dudit bloc moteur et de ses organes de fonctionnement.

Une pompe à eau assure le pompage de l'eau de refroidissement ER, eau douce ou eau de mer, et la met en circulation à travers une durite 122. Cette durite 122 débouche dans l'échangeur de turbocompresseurs 120-1, par une extrémité droite et sort par l'extrémité gauche à travers une durite 122-1.

La durite 122-1 se prolonge vers l'avant du moteur pour attaquer l'échangeur moteur 120-2. Cet échangeur moteur 120-2 est disposé en tête de moteur, en lieu et place des moyens de refroidissement moteur nécessaires sur les véhicules terrestres, notamment les ventilateurs de refroidissement.

L'encombrement généré par cet échangeur n'excède pas l'encombrement générale du bloc moteur et de ses organes de fonctionnement.

L'échangeur moteur 120-2 peut être avantageusement du même type que l'échangeur 20-2 et que l'échangeur décrit dans la demande de brevet européen EP 2 009 259.

Le fluide de refroidissement FR du moteur sortant de canaux de circulation au sein du bloc moteur 110, ce fluide refroidissement FR du moteur étant en circuit fermé, circule dans des tubes baignant dans l'eau de refroidissement ER en circulation.

On note que dans ce cas d'un moteur à cylindres en Vé, il est prévu un tandem d'échangeurs compacts, du type de celui du brevet mentionné ci-avant, superposés.

L'eau de refroidissement ER sort de l'échangeur moteur 120-2 par une durite 122-2 pour entrer dans l'échangeur d'inverseur 120-3. On note de nouveau que la longueur de durite est courte et la durite ne présente pas de coude et autre angle susceptible de créer de la perte de charge.

Cet échangeur d'inverseur 120-3 comporte un carter avec une entrée 120-31 et une sortie 120-32 et l'inverseur 114 comporte lui-même un entrée 114-1 et une sortie 114-2.

La sortie 114-2 est relié par un premier flexible hydraulique, de type commun, à l'entrée 120-31 de l'échangeur d'inverseur 120-3 et la sortie 120-32 est reliée par un second flexible hydraulique à l'entrée 114-1 de l'inverseur.

Ainsi, l'huile sort de l'inverseur 114, entre dans l'échangeur d'inverseur 120-3, circule dans un tube de circulation au sein du carter de l'échangeur d'inverseur 114 et se refroidit par échange avec l'eau de refroidissement ER qui circule dans le carter.

Cet échangeur est un échangeur fluide liquide/fluide liquide, dont un des fluides liquides est de l'huile si bien que l'échange est excellent.

On note que cette durite 122-2 est courte entre l'échangeur moteur 120-2 et l'échangeur 120-3 d'inverseur.

L'eau de refroidissement ER sort par la durite 122-3 de l'échangeur d'inverseur 120-3 pour entrer dans la sortie 118 des gaz de combustion, commune aux deux rangées de cylindres, en aval des chambres chaudes 116G-1 et 116D-1 du turbocompresseur. De nouveau, on constate que cette durite est de longueur réduite

L'eau de refroidissement ER se mélange aux gaz de combustion, assurant également leur refroidissement avant le passage dans la ligne d'échappement et le rejet extérieur.

On constate une compacité importante de la ligne d'échangeurs 120 selon la présente invention, des longueurs de durite très limitées et un alignement de ces durites.

On constate que la ligne d'échangeur 120 est disposée suivant une spirale horizontale.

La ligne d'échangeurs 120, dans le cas d'un moteur avec cylindres en Vé, reste également très compact du fait que les trois échangeurs sont situés dans des volumes laissés libres entre les organes complémentaires du bloc moteur et/ou libérés par la géométrie en Vé dudit bloc moteur.

Deux des refroidisseurs, celui des turbocompresseurs et moteur, sont communs aux deux rangées de cylindres, ce qui est particulièrement homogène et compact tout en autorisant une totale accessibilité.

La présente invention propose ainsi un agencement d'une ligne d'échangeurs d'une grande compacité, adaptable aux différentes géométries de moteur, en ligne ou en Vé, et ceci conduit à de grandes facilités de manœuvre dudit bloc moteur tant lors de la pose à travers le pont que dans le cas du retrait et confère également une très grande accessibilité pour les interventions moteur en place.

## Revendications

1. Agencement d'échangeurs de marinisation d'un moteur marin, comprenant un bloc moteur (10, 110) avec des cylindres en ligne ou des cylindres en Vé, refroidi par un fluide de refroidissement FR, au moins un turbocompresseur (16, 116) avec une chambre chaude (16-1, 116-1) reliée à une sortie des gaz de combustion (18, 118) et une chambre froide (16-2, 116-2) reliée aux cylindres du bloc moteur, un inverseur (14, 114) comprenant un carter et contenant de l'huile, **caractérisé en ce qu'**il comprend :
- une durite (22, 122) d'amenée de l'eau de refroidissement ER,
- un échangeur de turbocompresseur (20-1, 120-1),
- un échangeur moteur (20-2, 120-2),
- un échangeur d'inverseur (20-3, 120-3),
- une durite (22-3, 122-3) d'évacuation de cette eau de refroidissement ER vers une sortie des gaz de combustion (18, 118), en aval de la chambre chaude (16-1, 116G/D-1) de chacun des au moins un turbocompresseur (16, 116),
**caractérisé en ce que** les trois échangeurs étant disposés dans cet ordre et interposés suivant le sens de circulation de l'eau entre la durite d'amenée de l'eau de refroidissement ER et la durite d'évacuation de cette même eau de refroidissement.

2. Agencement d'échangeurs de marinisation d'un moteur marin selon la revendication 1, **caractérisé en ce que**, dans le cas d'un moteur avec des cylindres en ligne, la ligne d'échangeurs (20) comprenant les échangeurs de turbocompresseur (20-1), de moteur (20-2) et d'inverseur (20-3), est agencée du même côté du bloc moteur (10).

3. Agencement d'échangeurs de marinisation d'un moteur marin selon la revendication 2, **caractérisé en ce que** la ligne d'échangeurs (20) est agencée suivant une spirale dans un plan vertical.

4. Agencement d'échangeurs de marinisation d'un moteur marin selon la revendication 1, **caractérisé en ce que**, dans le cas d'un moteur avec des cylindres en Vé, la ligne d'échangeur (120) comprend, dans cet ordre, l'échangeur de turbocompresseurs (120-1) qui est disposé immédiatement au-dessus du bloc moteur, l'échangeur moteur (120-2) qui est disposé en tête du bloc moteur (110) et l'échangeur d'inverseur (120-3).

5. Agencement d'échangeurs de marinisation d'un moteur marin selon la revendication 4, **caractérisé en ce que** la ligne d'échangeurs (120) est agencée suivant une spirale dans un plan horizontal.

6. Agencement d'échangeurs de marinisation d'un moteur marin selon l'une quelconque des revendications précédentes, **caractérisé en ce qu'**il comprend en plus de la durite (22, 122) d'amenée de l'eau de refroidissement ER et de la durite (22-3, 122-3) d'évacuation de cette eau de refroidissement ER vers une sortie des gaz de combustion (18, 118) une durite (22-1, 122-1) entre l'échangeur de turbocompresseur (20-1, 120-1) et l'échangeur moteur (20-2, 120-2), et une durite (22-2, 122-2) entre cet échangeur moteur (20-2, 120-2) et l'échangeur d'inverseur (20-3, 120-3).

7. Agencement d'échangeurs de marinisation d'un moteur marin selon l'une quelconque des revendications précédentes, **caractérisé en ce que** la sortie (14-2, 114-2) de l'inverseur est reliée par un premier flexible hydraulique à l'entrée (20-31, 120-31) de l'échangeur d'huile et la sortie (20-32, 120-32) de l'échangeur d'huile est reliée par un second flexible hydraulique à l'entrée (14-1, 114-1) de l'inverseur.

## Patentansprüche

1. Kühleranordnung für die Marinisierung eines Schiffsmotors, der einen mit einer Kühlflüssigkeit FR gekühlten Motorblock (10, 110) mit Zylindern in Reihen- oder V-Bauweise umfasst, sowie mindestens einen Turbolader (16, 116) mit einer Warmkammer (16-1, 116-1), die mit einem Ausgang der Verbrennungsgase (18, 118) verbunden ist, und einer Kaltkammer (16-2, 116-2), die mit den Zylindern des Motorblocks verbunden ist, und ein Wendegetriebe (14, 114) mit einer Öl enthaltenden Ölwanne, **dadurch gekennzeichnet, dass** sie umfasst:
- einen Zuführschlauch (22, 122) für Kühlwasser ER
- einen Turboladerkühler (20-1, 120-1)
- einen Motorkühler (20-2, 120-2)
- einen Wendegetriebekühler (20-3, 120-3)
- einen Ableitschlauch (22-3, 122-3) für das Kühlwasser ER zu einem Ausgang der Verbrennungsgase (18, 118), der nach der Warmkammer (16-1, 116G/D-1) jedes mindestens einen Turboladers (16, 116) angeordnet ist,
**dadurch gekennzeichnet, dass** die drei Kühler in dieser Reihenfolge angebracht und gemäß der Fließrichtung des Wassers zwischen dem Zuführschlauch des Kühlwassers ER und dem Ableitschlauch desselben Kühlwassers angeordnet sind.

2. Kühleranordnung für die Marinisierung eines Schiffsmotors nach Anspruch 1, **dadurch gekennzeichnet, dass** sich bei einem Motor mit Zylindern in Reihenbauweise die Kühlerreihe (20) mit dem Turboladerkühler (20-1), dem Motorkühler (20-2) und dem Wendegetriebekühler (20-3) auf der gleichen Seite des Motorblocks (10) befindet.

3. Kühleranordnung für die Marinisierung eines Schiffsmotors nach Anspruch 2, **dadurch gekennzeichnet, dass** die Kühlerreihe (20) in einer senkrechten Ebene und spiralförmig angeordnet ist.

4. Kühleranordnung für die Marinisierung eines Schiffsmotors nach Anspruch 1, **dadurch gekennzeichnet, dass** die Kühlerreihe (120) bei einem Motor mit Zylindern in V-Bauweise in dieser Reihenfolge den Turboladerkühler (120-1), der direkt über dem Motorblock angeordnet ist, den Motorkühler (120-2), der vor dem Motorblock (110) angeordnet ist, und den Wendegetriebekühler (120-3) umfasst.

5. Kühleranordnung für die Marinisierung eines Schiffsmotors nach Anspruch 4, **dadurch gekennzeichnet, dass** die Kühlerreihe (120) in einer waagrechten Ebene und spiralförmig angeordnet ist.

6. Kühleranordnung für die Marinisierung eines Schiffsmotors nach einem der vorausgehenden Ansprüche, **dadurch gekennzeichnet, dass** sie zusätzlich zum Zuführschlauch (22, 122) für Kühlwasser ER und zum Ableitschlauch (22-3, 122-3) dieses Kühlwassers zu einem Ausgang der Verbrennungsgase (18, 118) einen Schlauch (22-1, 122-1) zwischen dem Turboladerkühler (20-1, 120-1) und dem Motorkühler (20-2, 120-2) sowie einen Schlauch (22-2, 122-2) zwischen diesem Motorkühler (20-2, 120-2) und dem Wendegetriebekühler (20-3, 120-3) umfasst.

7. Kühleranordnung für die Marinisierung eines Schiffsmotors nach einem der vorausgehenden Ansprüche, **dadurch gekennzeichnet, dass** der Ausgang (14-2, 114-2) des Wendegetriebes über einen ersten Hydraulikschlauch mit dem Eingang (20-31, 120-31) des Ölkühlers verbunden ist und der Ausgang (20-32, 120-32) des Ölkühlers über einen zweiten Hydraulikschlauch mit dem Eingang (14-1, 114-1) des Wendegetriebes verbunden ist.

## Claims

1. An arrangement of marine-adaptation exchangers of a marine engine, comprising an engine block (10, 110) with inline cylinders or cylinders in a V, cooled by a cooling fluid FR, at least one turbocompressor (16, 116) with a hot chamber (16-1, 116-1) connected to a combustion-gas outlet (18, 118) and a cold chamber (16-2, 116-2) connected to the cylinders of the engine block, and an inverter (14, 114) comprising a casing and containing oil, **characterised in that** it comprises:
- a hose (22, 122) supplying the cooling water ER,
- a turbocompressor exchanger (20-1, 120-1),
- an engine exchanger (20-2, 120-2),
- an inverter exchanger (20-3, 120-3),
- a hose (22-3, 122-3) for discharging this cooling water ER to an outlet of the combustion gases (18, 118), downstream of the hot chamber (16-1, 116G/D-1) of each of the at least one turbocompressor (16, 116),
**characterised in that**, the three exchangers being arranged in this order and interposed in the direction of circulation of the water between the hose supplying the cooling water ER and the hose discharging this same cooling water.

2. An arrangement of marine-adaptation exchangers of a marine engine according to claim 1, **characterised in that**, in the case of an engine with inline cylinders, the line of exchangers (20) comprising the turbocompressor exchanger (20-1), engine exchanger (20-2) and inverter exchanger (20-3) is arranged on the same side of the engine block (10).

3. An arrangement of marine-adaptation exchangers of a marine engine according to claim 2, **characterised in that** the line of exchangers (20) is arranged in a spiral in a vertical plane.

4. An arrangement of marine-adaptation exchangers of a marine engine according to claim 1, **characterised in that**, in the case of an engine with cylinders in a V, the line of exchangers (120) comprises, in this order, the turbocompressor exchanger (120-1), which is arranged immediately above the engine block, the engine exchanger (120-2), which is arranged at the head of the engine block (110), and the inverter exchanger (120-3).

5. An arrangement of marine-adaptation exchangers of a marine engine according to claim 4, **characterised in that** the line of exchangers (120) is arranged in a spiral in a horizontal plane.

6. An arrangement of marine-adaptation exchangers of a marine engine according to any of the preceding claims, **characterised in that** it comprises, in addition to the hose (22, 122) supplying the cooling water ER and the hose (22-3, 122-3) discharging this cooling water ER to a combustion-gas outlet (18, 118), a hose (22-1, 122-1) between the turbocompressor exchanger (20-1, 120-1) and the engine exchanger (20-2, 120-2), and a hose (22-2, 122-2) between this engine exchanger (20-2, 120-2) and the inverter exchanger (20-3, 120-3).

7. An arrangement of marine-adaptation exchangers of a marine engine according to any of the preceding claims, **characterised in that** the outlet (14-2, 114-2) of the inverter is connected by a first hydraulic hose to the inlet (20-31, 120-31) of the oil exchanger and the outlet (20-32, 120-32) of the oil exchanger is connected by a second hydraulic hose to the inlet (14-1, 114-1) of the inverter.
